# EUROPEAN PATENT APPLICATION

(11) **EP 2 700 979 A1**
(43) Date of publication of application: **26.02.2014**
(21) Application number: 12181210.1
(22) Date of filing: 21.08.2012
(51) Int. Cl.: G01T 1/29

(54) **Transverse Profile Imager for Ionizing Radiation**

(71) Applicant: Paul Scherrer Institut, 5232 Villigen (CH)
(72) Inventor: Ischebeck, Rasmus, 3007 Bern (CH); Thominet, Vincent, 5330 Bad Zurzach/AG (CH)
(74) Representative: Fischer, Michael

(57) **Abstract**

The present invention discloses a first optical system to image visible scintillating light generated by an ionizing radiation beam on a scintillating crystal in medium having a first refractive index n₁, comprising:
a) the scintillating crystal having a second refractive index n₂, said crystal being oriented that an angle α of the ionizing radiation beam and an angle β of the optical axis of the scintillating light both relative to the normal of the surface of the scintillating crystal observe the refraction law *n₁ sin(α) = n₂ sin (β) ;*
b) imaging optics for the scintillating light being disposed downstream of the scintillating crystal; and
c) a position sensitive detector for a spatially resolved imaging of the scintillating light being disposed downstream of the imaging optics;
wherein the imaging optics, such as a lens, and the position sensitive detector are oriented that a common intersection of the planes of the scintillating crystal, the imaging optics and the position sensitive detector is established.

A second optical system similar to the first one comprises a significant part a mirror for reflecting the scintillating light in a direction substantially perpendicular to the direction of the ionizing radiation beam; said mirror being disposed downstream of the scintillating crystal. The other parts are identical to the respective parts of the first optical system.

## Description

The present invention relates to optical tools for measuring high energy particle and photon beams. In particular, the present invention relates to an optical system to image the visible light generated by the high energy beam on a scintillating crystal.

X-ray free electron lasers are becoming an indispensable tool to study molecular interactions on a femtosecond time scale. To generate the X-rays, ultra-relativistic electron beams are compressed and sent through a magnetic undulator. For an initial setup of such devices, as well as for continued monitoring of beam parameters, profile monitors for both the X-ray pulses as well as the electron beams are used. Such profile monitors for ionizing radiation typically consist of a screen that can be inserted to intercept the primary X-ray / electron beam inside a vacuum chamber, generating light that is imaged onto a CCD / CMOS area detector. The goal of the imaging system is that the distribution on the detector corresponds to the transverse distribution in the primary beam. Typically, the detectors are outside the accelerator vacuum; a vacuum window is thus required in the optical system. Furthermore, radiation damage considerations require a large distance as well as shielding between the primary beam and the detector.

In the last years, several factors have contributed to more stringent requirements on these profile monitors, which have pushed present designs to their limits:
- Low emittance electron beams generate small spots, typically 10 to 100 µm rms, which requires a high-resolution magnifying imaging system; the beam size can be smaller than the thickness of scintillating crystals used in these monitors;
- Low charge (10 pC) bunches are now baseline in many X-ray free electron laser designs. To achieve reasonable signal-to-noise level for single-shot measurements, a scintillator of at least 100 µm is required. In particular, the required thickness can be larger than the transverse dimension of the beam;
- A possible damage to mirror surfaces by the primary beam, as well as the desire to have partially transparent monitors for X-rays favors a design where the primary beam is not intercepted by a mirror;
- If an electron pulse has a sub-structure at optical wavelengths, it emits coherent optical transition radiation at any surface, which invalidates the measurement if it reaches the detector.

In the past, scintillators were routinely used to visualize high energy beams. However, for beam sizes below the thickness of scintillating crystals, the resolution may be limited by the imaging optics, as will be shown below. This limitation, together with the non-linear response near saturation threshold have led to a trend towards the use of optical transition radiation (OTR) to determine the transverse profile of charged particle beams. However, the light yield is very low, which can be an issue if low-charge bunches are to be measured. Furthermore, coherent optical transition radiation that is emitted for highly compressed bunches has recently led to an increased interest in scintillators for beam profile measurement.

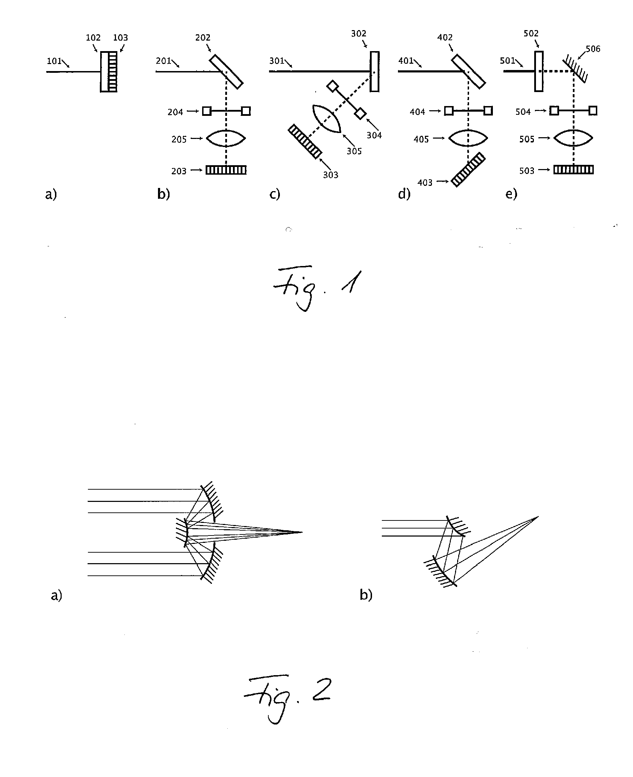

Energy deposited in a scintillating crystal leads to the emission of light, which is then imaged onto a pixelated sensor such as a CCD or CMOS sensor. It is assumed here that the beam passes the crystal undeflected, and that the emission of fluorescent light is isotropic. Straight-forward approaches on how to image the scintillation light have been patented (e.g. US Patent 4,916,319), but do not always produce the best possible resolution as soon as the beam size is smaller than the thickness of the scintillating crystal. Figure 1 shows some commonly used prior art layouts to image the fluorescent light onto the detector. In this figure 1, the following variants are shown:
a) Direct detection of the light, possibly with a light guide between scintillator and detector (EP 1 365 260 A1);
b) Imaging of the light through a vacuum window (Walasek-Höhne et al., Proceedings of DIPAC 2011);
c) Alternative geometry to image the light (Kudo et al., Rev Sci Instr, 77(12), 1231051231054 (2006));
d) Usage of the Scheimpflug principle (GB 1196 (1904)) allows for a larger field of view; and
e) Rectilinear imaging by introducing an in-vacuum mirror (Ischebeck et al., Proceedings of LINAC 2010).

Each layout has specific disadvantages that limit the applicability for upcoming X-ray free electron lasers:
Layout (a) may lead to radiation damage in the detector and is difficult to implement in an ultra high vacuum system.
In layouts (b) and (c) the horizontal resolution is limited to the scintillator thickness because points along the primary beam axis are imaged to different locations on the detector. The field of view is limited by the depth of field of the optical system.
Both issues are exacerbated for magnifying optics.

Application of the Scheimpflug principle (GB patent 1196 (1904)), shown in layout (d), improves the field of view, but the limitation due to the finite scintillator thickness remains. Furthermore, a magnifying optics is more difficult to implement when observing the Scheimpflug geometry.

Layout (e) can be set up to generate excellent resolution, smaller than the thickness of the scintillating crystal. In the SwissFEL Injector Test Facility, beamlets of a size of 14 µm rms have been measured with 200 µm thick crystals (Ischebeck et al., Proceedings of LINAC 2010). However, the mirror intercepts the primary beam, which may degrade the beam quality downstream, and which may lead to a gradual loss of reflectivity due to radiation damage.

Coherent optical transition radiation, generated with charged particle beams at vacuum-scintillator and vacuum-mirror interfaces, is emitted towards the camera in layouts (a), (b), (d) and (e). When this occurs, the intense coherently emitted light invalidates the measurement of beam profiles.

Reflective optics offer many advantages over refractive systems, most notably they are free of chromatic aberrations. A Schwarzschild objective (Schwarzschild, 1905) is shown in Figure 2a. The curvature and position of the mirrors is chosen such that the mirrors are mono-centric, which results in a compensation of the spherical aberration. This design is being used both for finite and infinite object distance. Practically, a design can be almost concentric for getting a larger working distance. A concern of the Schwarzschild optics is the central obscuration; several patents have been filed to overcome this limitation:
US Patent 4,020,590 uses an off-axis Schwarzschild design to produce an inexpensive laser beam expander. US Patent 7,190,460 describes the usage of a partial Schwarzschild design as a means to collimate rays (Figure 2b). A system for a finite focusing distance can be achieved with the proper radii of curvature.

Therefore, it is the objective of the present invention to provide an optical system that images the light emitted in scintillating crystals such that a resolution better than the crystal thickness can be achieved free of chromatic aberrations.

This objective is achieved according to the present invention by a first optical system to image visible scintillating light generated by an ionizing radiation beam on a scintillating crystal in medium having a first refractive index n₁, comprising:
a) the scintillating crystal having a second refractive index n₂, said crystal being oriented that an angle α of the ionizing radiation beam and an angle β of the optical axis of the scintillating light both relative to the normal of the surface of the scintillating crystal observe the refraction law *n₁ sin(*α*) = n₂ sin(*β*)*;
b) imaging optics for the scintillating light being disposed downstream of the scintillating crystal; and
c) a position sensitive detector for a spatially resolved imaging of the scintillating light being disposed downstream of the imaging optics;
   wherein the imaging optics, such as a lens, and the position sensitive detector are oriented that a common intersection of the planes of the scintillating crystal, the imaging optics and the position sensitive detector is established.

This objective is also achieved according to the present invention by a second optical system to image visible scintillating light generated by an ionizing radiation beam on a scintillating crystal in medium having a first refractive index n₁, comprising:
a) the scintillating crystal having a second refractive index n₂ being oriented that an angle α of the ionizing radiation beam and an angle β of the optical axis of the scintillating light both relative to the normal of the surface of the scintillating crystal observe the refraction law *n₁ sin(*α*) = n₂ sin(*β*)*;
b) a mirror for reflecting the scintillating light in a direction substantially perpendicular to the direction of the ionizing radiation beam; said mirror being disposed downstream of the scintillating crystal;
c) imaging optics for the scintillating light being disposed downstream of the mirror; and
d) a position sensitive detector for a spatially resolved imaging of the scintillating light being disposed downstream of the imaging optics.

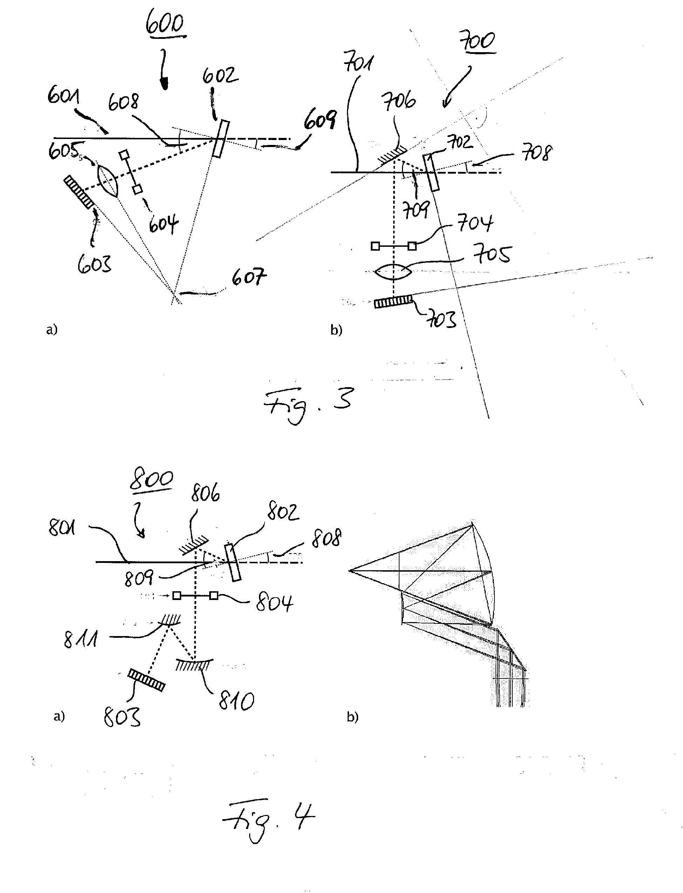

The new layouts, as also shown in Figures 3 and 4 resp. observe the Snell-Descartes law of refraction as well as the Scheimpflug principle, thereby eliminating the limitations mentioned above. Light generated by an ionizing particle at different depths in the scintillator crystal is now focused onto the same point on the detector (albeit with different point spread functions) which avoids any transverse shift on the detector. Further, optical transition radiation does not reach the imaging system. Thus, coherently generated OTR does not spoil the measurement of beam profiles. The present invention allows for a magnification M > 1. The radiation is incident at an angle of 90° to the detector, which makes the usage of commercial CCD and CMOS chips with microlens arrays possible. Any central obscuration in the imaging system is eliminated. Furthermore, using mirror optics, the optical system is achromatic, which can be used with a wide range of wavelengths. Particularly, spherical mirrors can be used, no aspheres are needed. Nevertheless, an off-axis design requires aspheric surfaces that depart slightly from the sphere. And last but not least, the large working distance allows for an optional vacuum window, and allows to protect the camera from ionizing radiation. Said vacuum window is preferably disposed between the scintillating crystal and imaging optics or between the mirror prior to the imaging optics and the imaging optics themselves

Typically, a lens or a set of lenses can be used as imaging optics.

To render the system achromatic, the imaging optics can be a set of two additional mirrors forming a partial Schwarzschild objective. In particular, the two additional mirrors can be two monocentric spherical mirrors.

Preferred examples of the present invention are hereinafter described in more detail with respect to the following drawings:
Figure 1 depicts commonly used prior art layouts to image fluorescent light onto a detector.
Figure 2 shows schematically the principle of a Schwarzschild objective.
Figure 3 schematically illustrates in part (a) first optical system observing the Snell-Descartes law of refraction and in part (b) a second optical system under the same assumptions as part (a).
Figure 4 schematically showing a third modification of the second optical system using a partial Schwarzschild objective (a) and a schematic view of the ray tracing for this setup (b).

In Figure 3 (a) an optical system 600 is shown that satisfies the principle of Snell Descartes's law of refraction, wherein 601 is a primary beam, 602 a scintillating crystal, 603 a detector, 604 an (optional) vacuum window, 605 a lens as imaging optics, 607 a common intersection of the planes through the scintillating crystal 602, the lens 605 and the detector 603, according to the Scheimpflug principle, 608 the angle α and 609 an angle β which are chosen according to the Snell-Descartes law of refraction, sin β / sin α = n where n is the refractive index of the scintillating crystal.

As a result, radiation emitted along the axis of the primary beam 601 is imaged onto the same spot on the detector 603, albeit at slightly different depth. By observing the Scheimpflug principle, the field of view can extend over the entire scintillating crystal 602. In the second embodiment, shown in Figure 3 (b), a more compact vacuum chamber can be realized with an additional in-vacuum mirror 706. In this part (b) 701 is a primary beam, 702 a scintillating crystal, 703 a detector, 704 a vacuum window, 705 a lens as imaging optics, 706 a mirror, 708 and 709 are angles to fulfill the Snell-Descartes law of refraction.

Constructing an imaging optics according to the Scheimpflug principle, the designer faces two difficulties:
- Tilting a spherical lens produces an astigmatism, equivalent to the astigmatism that occurs for off-axis objects. Lens systems that correct for this effect have been designed (US Patent 5,841,590), and typical designs allow for a tilt of up to 8 degrees; and
- Tilting a modern CCD / CMOS detector may result in the reduction of sensitivity, because a microlens array that focuses light onto each pixel is firmly attached to the sensor.

While for optical systems with a magnification M < 1, these constraints can be overcome, the situation is more difficult for M ≈ 1 macro objectives, and even more so for magnifying optics M > 1.

In the following, a reflective optical system 800 is described that images a tilted object such that the rays are at normal incidence on a detector 803. It can be designed to achieve magnifications M > 1. The optical system 800 is based on the Schwarzschild design, which can generate a diffraction limited performance by balancing spherical aberrations. For this embodiment of the transverse profile imager, the imaging optics comprise two spherical mirrors 810 and 811, as illustrated in Figure 4 (a). The two mirrors 810, 811 are arranged such that they form a partial Schwarzschild objective, as described above. In this figure 4, 801 show a primary beam, 802 a scintillating crystal, 803 a detector, 804 an (optional) vacuum window, 806 a mirror, 808 and 809 are angles to fulfill the Snell-Descartes law of refraction, 810 and 811 are the mirrors that form a partial Schwarzschild objective.

The present invention therefore are imaging systems for a scintillating crystal to image the transverse profile of ionizing radiation. Three different embodiments are shown in Figures 3a, 3b and 4. The angles of the primary beam of ionizing radiation and the optical axis of the scintillating light to the scintillator surface observe the Snell-Descartes law of refraction. In the third embodiment, two monocentric spherical mirrors form a partial Schwarzschild objective.

This system can image beam spots that are smaller than the thickness of the scintillating crystal. It combines thus the sensitivity and the spatial resolution required for next generation X-ray radiation sources. To conclude, the optical system has the following advantages, as compared to presently used monitors:
- Light generated by an ionizing particle at different depths in the scintillator is focused onto the same point on the detector (albeit with different point spread functions). There is no transverse shift on the detector;
- Optical transition radiation does not reach the imaging system. Thus, coherently generated OTR does not spoil the measurement of beam profiles;
- A magnification M > 1 is possible;
- The radiation is incident at an angle of 90° to the detector, which makes the usage of commercial CCD and CMOS chips with microlens arrays possible;
- There is no central obscuration in the imaging system;
- Using mirror optics, the optical system is an achromat, which can be used with a wide range of wavelengths
- Spherical mirrors can be used, no aspheres are needed.
- The large working distance allows for a vacuum window, and allows to protect the camera from ionizing radiation.

## Claims

1. An optical system (600) to image visible scintillating light generated by an ionizing radiation beam (601) on a scintillating crystal (602) in a medium having a first refractive index n₁, preferably vacuum, comprising:
a) the scintillating crystal (602) having a second refractive index n₂, said crystal being oriented that an angle β (609) of the ionizing radiation beam and an angle α (608) of the optical axis of the scintillating light both relative to the normal of the surface of the scintillating crystal (602) observe the refraction law *n₁ sin(*α*) = n₂ sin(*β*)*;
b) imaging optics (605) for the scintillating light being disposed downstream of the scintillating crystal (602); and
c) a position sensitive detector (603) for a spatially resolved imaging of the scintillating light being disposed downstream of the imaging optics (605);
wherein the imaging optics (605), such as a lens, and the position sensitive detector (603) are oriented that a common intersection (607) of the planes of the scintillating crystal (602), the imaging optics (605) and the position sensitive detector (603) is established.

2. An optical system (700) to image visible scintillating light generated by an ionizing radiation beam (701) on a scintillating crystal (702) in a medium having a first refractive index n₁, preferably vacuum, comprising:
a) the scintillating crystal (702) having a second refractive index n₂ being oriented that an angle α (708) of the ionizing radiation beam and an angle β (709) of the optical axis of the scintillating light both relative to the normal of the surface of the scintillating crystal observe the refraction law *n₁ sin(*α*) = n₂ sin(*β*)*;
b) a mirror (706) for reflecting the scintillating light in a direction substantially perpendicular to the direction of the ionizing radiation beam (701); said mirror (706) being disposed downstream of the scintillating crystal (702);
c) imaging optics (705) for the scintillating light being disposed downstream of the mirror (706); and
d) a position sensitive detector (703) for a spatially resolved imaging of the scintillating light being disposed downstream of the imaging optics (705).

3. The optical system according to claim 1 or 2, wherein the imaging optics is at least one lens (605, 705).

4. The optical system according to claim 2, wherein the imaging optics is a set of two additional mirrors (810, 811) forming a partial Schwarzschild objective.

5. The optical system according to claim 4, wherein the two additional mirrors are two monocentric spherical mirrors (810, 811).
